(19) Europäisches Patentamt
European Patent Office
Office européen des brevets

(11) **EP 2 072 787 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(51) Int Cl.:
*F02D 41/00* *(2006.01)*      *F02D 41/14* *(2006.01)*

(21) Anmeldenummer: **08170898.4**

(22) Anmeldetag: **08.12.2008**

(54) **Regelungsverfahren einer Motordrehzahl eines Gasmotors**

Engine speed control method for a gas engine

Procédé de commande de la vitesse d'un moteur à gaz

(84) Benannte Vertragsstaaten:
**DE ES FR GB IT**

(30) Priorität: **20.12.2007 DE 102007055885**

(43) Veröffentlichungstag der Anmeldung:
**24.06.2009 Patentblatt 2009/26**

(73) Patentinhaber: **ZF Friedrichshafen AG**
**88038 Friedrichshafen (DE)**
Benannte Vertragsstaaten:
**DE ES FR GB IT**

(72) Erfinder:
• **Buchhold, Oliver**
**88693 Deggenhausertal (DE)**
• **Mansour, Rachid**
**88677 Markdorf (DE)**

(56) Entgegenhaltungen:
WO-A1-2007/088761      DE-A1- 10 232 327
US-A- 5 463 993      US-B1- 7 082 924

**Beschreibung**

Die Erfindung betrifft ein Regelungsverfahren einer Motordrehzahl eines Gasmotors nach dem Oberbegriff des Anspruchs 1.

Standard gemäß wird das übertragbare Kupplungsmoment (in den folgenden Text nur Kupplungsmoment genannt) in einem Antriebstrang mit einem Gasmotor derart angesteuert, dass eventuelle Schwankungen in dem Motormoment des Gasmotors kompensiert werden, so dass der Motor nicht abwürgt. Ein Soll-Kupplungsmoment bildet somit eine dynamische Vorsteuerung, welche in einem vom Gasmotor angeforderten Soll-Motormoment mit einberechnet wird.

Ein Antriebsstrang eines Fahrzeugs weist zumindest ein elektronisches Steuergerät zur Steuerung des Motors auf und ein elektronisches Steuergerät zur Steuerung des Getriebes und der Kupplung. Die zumindest zwei Steuergeräte sind über dem CAN-Bus mit einander verbunden. In die folgende Beschreibung wird zwischen einem Motorsteuergerät, welches der Gasmotor steuert und einer Getriebesteuerung, welche das Getriebe und die Kupplung steuert unterschieden.

In einem standardgemäßen Regelkreisverfahren zur Regelung der Motordrehzahl des Gasmotors wird in der Getriebesteuerung eine Differenz zwischen einer Soll-Motordrehzahl und einer Ist-Motordrehzahl des Gasmotors berechnet. Die Differenz dient als Eingangsgröße für einen Regler, welcher daraus ein Soll-Motormoment des Gasmotors berechnet. Das Soll-Motormoment wird mit einer dynamischen Vorsteuerung des Soll-Kupplungsmoments addiert, wobei die beide Momente das Soll-Gesamtmoment des Gasmotors bildet. Das Soll-Gesamtmoment des Gasmotors wird über den CAN-Bus des Fahrzeugs zum Motorsteuergerät übermittelt, wobei das Soll-Gesamtmoment von dem Gasmotor angefordert wird. Das Gas/Luftgemisch des Gasmotors wird somit aufbereitet, wobei das reale Motormoment geliefert wird. Das reale Motormoment wird reduziert mit dem Ist-Kupplungsmoment und bildet somit das Ist-Motormoment, welches mittels des Motorträgheitsmoments zur Berechnung der Ist-Drehzahl des Gasmotors für den Regler benutzt wird.

Wie beschrieben muss das Gas/Luftgemisch bevor der Gasmotor das gewünschte Moment liefern kann aufbereitet werden. Die Aufbereitung des Gas/Luftgemisches wird mittels eines Verzögerungsglieds modelliert. Das Verzögerungsglied ist eine Darstellung der Aufbereitungzeit des Gas/Luftgemischs in dem komplexen Bereich.

Die Aufbereitungzeit des Gas/Luftgemischs führt zu einer signifikanten Verzögerung des realen Motormoments gegenüber dem über CAN übermittelten Sollwert. Diese Verzögerung führt insbesondere bei schnellen Schließvorgängen der Kupplung oder bei schnell erhöhten Leistungsanforderungen des Motors zu einem Einbrechen der Motordrehzahl, wobei der Motor in schlimmsten Fall abgewürgt wird. Das Einbrechen der Motordrehzahl kommt daher, dass die schnelle Erhöhung des realen Kupplungsmomentes nicht durch eine schnelle Erhöhung des Motormomentes kompensiert werden kann bzw. die schnell erhöhte Leistungsanforderung nicht entsprechend schnell erfüllt werden kann.

Daher ist es die Aufgabe der vorliegenden Erfindung ein Regelungsverfahren der Motordrehzahl vorzuschlagen, welches eine Verzögerung der Lieferung des gewünschten Motormomentes vermeidet.

Ausgehend von einem Verfahren der eingangs näher genannten Art erfolgt die Lösung dieser Aufgabe mit den Merkmalen des Anspruchs 1, vorteilhafte Ausgestaltungen sind in den Unteransprüchen beschrieben.

Erfindungsgemäß wird vorgeschlagen, dass die Aufbereitungzeit des Gas/Luftgemischs schon in der dynamischen Vorsteuerung mit einbezogen wird. Somit wird die Ansprechzeit des Gasmotors verkürzt werden und ein drohendes Abwürgen des Gasmotors wird vermieden.

Die Inverse des Aufbereitungsglieds wird in der dynamischen Vorsteuerung mit dem Soll-Kupplungsmoment multipliziert. Die Vorsteuerungsfunktion wird somit von dem Soll-Kupplungsmoment und dem Aufbereitungszeit des Gas/Luftgemischs abhängig und damit auch mit dem vom Regler ausgerechnete Soll-Motormoment addiert um das Soll-Gesamtmoment zu bilden.

Durch die erfindungsgemäße dynamische Vorsteuerung des Motormomentes des Gasmotors wird sowohl eine deutlich verbesserte Qualität der Motordrehzahlregelung während des Anfahrens als auch bei anderen Fahrsituationen wenn eine erhöhte Motorleistung schnell angefordert wird erreicht. Ein Abwürgen des Gasmotors an starken Steigungen wird verhindert, sowohl als auch bei schnellen und spontanen Anfahrvorgängen, welche problemlos ausgeführt werden können.

In eine vorteilhafte Variante des erfindungsgemäßen Verfahrens wird die Aufbereitungszeit des Gas/Luftgemisches abhängig von dem Soll-Motormoment des Gasmotors und/oder der Motordrehzahl und/oder der Gastemperatur und/oder der Lufttemperatur berechnet.

Es wird auch vorgeschlagen, dass das Vorsteuerungsmoment der dynamischen Vorsteuerung aus der Gleichung:

$$Mv(s) = Mk\_soll * (1/Vg(s))$$

berechnet wird. In welcher Mk_soll das Soll-Kupplungsmoment ist und Vg(s) das Aufbereitungsglied des Gas/Luftgemisches ist.

Des Weiteren wird bevorzugt, dass der Regler ein P-Glied, ein I-Glied und ein D-Glied aufweist, wobei kein, ein oder zwei von den P-, I- bzw. D-Gliedern gleich null gesetzt werden. Der Regler kann somit sowohl ein P-Regler, I-Regler, D-Regler, PI-Regler, PD-Regler oder PID-Regler sein.

Weitere Varianten und vorteilhafte Weiterbildungen der Erfindung werden anhand der Zeichnung und der Ausführungsbeispiele beschrieben. Es zeigen:

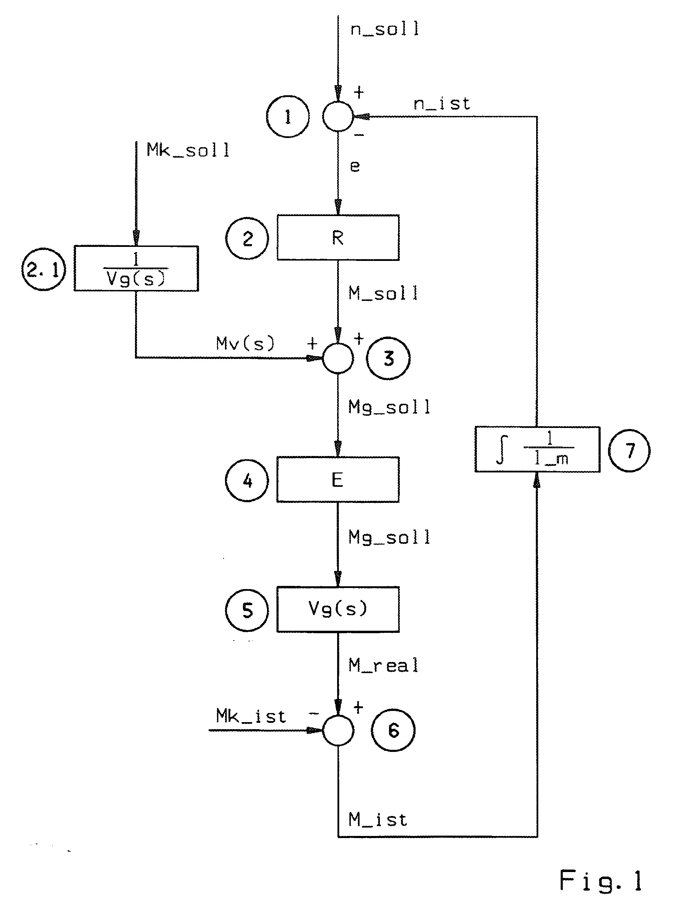

Fig. 1 zeigt ein Verfahrensschema des erfindungsgemäßen Steuerungsverfahrens

Eine Soll-Motordrehzahl n_soll wird im Verfahrensschritt 1 mit einem Ist-Motordrehzahl n_ist verglichen wobei eine Differenz zwischen der Soll-Motordrehzahl n_soll und der Ist-Motordrehzahl n_ist als Eingangswert e für einen PID-Regulator R dient.

Aus dem Eingangswert e wird im Verfahrensschritt 2 durch den Regulator R einem Soll-Motormoment M_soll berechnet.

Parallel mit dem Verfahrensschritt 2 wird Verfahrensschritt 2.1 durchgeführt, welches sieht vor, dass die dynamische Vorsteuerung berechnet wird. In die dynamische Vorsteuerung wird das Soll-Kupplungsmoment Mk_soll multipliziert mit der Inverse des Verzögerungsglieds Vg(s) des Gas/Luftgemischs für den Gasmotor. Das Verzögerungsglied Vg(s) ist ein mathematische Model der Aufbereitungszeit t_a des Gas/Luftgemischs und stellt die Aufbereitungszeit in dem komplexen Bereich dar. Somit bildet sich die Vorsteuerungsmoment Mv(s):

$$Mv(s) = Mk\_soll * (1/Vg(s))$$

$$Vg(s) = 1/(1 + t\_a*s)$$

$$Mv(s) = Mk\_soll + Mk\_soll*t\_a*s$$

Das Kupplungsmoment wird derart geregelt, dass das Ist-Kupplungsmoment, das Soll-Kupplungsmoment folgt. Dabei wird angenommen, dass der Unterschied zwischen dem Ist-Kupplungsmoment und dem Soll-Kupplungsmoment gering ist.

Im Verfahrensschritt 3 wird das Vorsteuerungsmoment Mv(s) mit dem Soll-Motormoment M_soll addiert. Somit bildet sich das Soll-Gesamtmoment Mg_soll.

Im Verfahrensschritt 4 wird das Soll-Gesamtmoment Mg_soll über den CAN-Bus des Fahrzeugs zu dem Motorsteuergerät E über dem CAN-Bus des Fahrzeugs weitergeleitet. Wobei das Soll-Gesamtmoment Mg_soll vom Gasmotor angefordert wird.

Im Verfahrensschritt 5 wird das Gas/Luftgemisch aufbereitet, wobei die Verzögerungsglied Vg(s) die Aufbereitungszeit t_a im Komplexenbereich ausdruckt. Das reale Motormoment M_real wird danach vom Gasmotor geliefert.

Durch die erfindungsgemäße dynamische Vorsteuerung stellt sich das reale Motormoment M_real ohne signifikante Verzögerung ein.

Im Verfahrensschritt 6 wird das Ist-Kupplungsmoment von dem Motormoment abgezogen, wobei das Ist-Motormoment zu dem Getriebe vorhanden steht.

In Verfahrensschritt 7 wird die Ist-Drehzahl des Gasmotors berechnet, in dem das Produkt des Ist-Motormoments M_ist und der Inverse des Motorträgheitsmoments I_m interiert wird.

Bezugszeichen

1. Verfahrensschritt
2. Verfahrensschritt
3. Verfahrensschritt
4. Verfahrensschritt

| | |
|---|---|
| 5. | Verfahrensschritt |
| 6. | Verfahrensschritt |
| 7. | Verfahrensschritt |
| n_soll | Soll-Drehzahl des Gasmotors |
| n_ist | Ist-Drehzahl des Gasmotors |
| e | Eingangswert des Reglers |
| R | Regler |
| M_soll | Soll-Motormoment |
| Mk_soll | Soll-Kupplungsmoment |
| Mv(s) | Vorsteuerungsmoment |
| Mg_soll | Soll-Gesamtmoment |
| E | elektronisches Steuergerät des Gasmotors |
| Vg(s) | Verzögerungsglied |
| M_real | reales Motormoment des Gasmotors |
| Mk_ist | Ist-Kupplungsmoment |
| M_ist | Ist-Motormoment |
| I_m | Trägheitsmoment des Gasmotors |

## Patentansprüche

1. Regelungsverfahren einer Motordrehzahl eines Gasmotors, welcher mittels zumindest einem elektronischen Steuergerät (E) gesteuert wird und zusätzlich eine automatisierte Kupplung von einer elektronischen Getriebesteuerung (E) gesteuert wird, wobei eine Differenz zwischen einer Soll-Motordrehzahl (n_soll) und einer Ist-Motordrehzahl (n_ist) des Gasmotors berechnet wird, welche als Eingangsgröße (e) für einen Regler (R) dient und der Regler (R) ein Soll-Motormoment (M_soll) des Gasmotors liefert und das Soll-Motormoment (M_soll) mit einem dynamischen Vorsteuerungsmoment (Mv) - umfassend ein Soll-Kupplungsmoment (Mk_soll), zu einem Soll-Gesamtmoment (Mg_soll) addiert wird, wobei das Soll-Gesamtmoment (Mg_soll) an das elektronischen Steuergerät (E) übermittelt wird und das elektronische Steuergerät (E) das Soll-Gesamtmoment (Mg_soll) vom Gasmotor anfordert und dabei ein entsprechendes Gas/Luftgemisch während einer Aufbereitungszeit (t_a) für den Gasmotor aufbereitet wird, **dadurch gekennzeichnet, dass** die Aufbereitungszeit (t_a) des Gas/Luftgemischs in der dynamischen Vorsteuerung miteinbezogen wird, **dadurch** dass eine Inverse eines Verzögerungsglieds Vg(s) mit dem Soll-Kupplungsmoment (Mk_soll) multipliziert wird.

2. Regelungsverfahren nach Anspruch 1, **dadurch gekennzeichnet, dass** die Aufbereitungszeit (t_a) aus der Motordrehzahl und/oder der Gastemperatur und/oder der Lufttemperatur berechnet wird.

3. Regelungsverfahren nach Anspruch 1 oder 2, **dadurch gekennzeichnet, dass** der Regler (R) ein P-Glied, ein I-Glied und ein D-Glied aufweist, wobei kein, ein oder zwei von den P-, I- bzw. D-Gliedem gleich null gesetzt wird.

4. Regelungsverfahren nach einem der Ansprüche 1 bis 3, **dadurch gekennzeichnet, dass** das Vorsteuerungsmoment (Mv(s)) aus folgender Formel berechnet wird:

$$Mv(s) = Mk\_soll*(1/Vg(s))$$

und Mk_soll = Soll-Kupplungsmoment und
Vg(s) = Aufbereitungsglied des Gas/Luftgemisch

5. Regelungsverfahren nach einem der Ansprüche 1 bis 4, **dadurch gekennzeichnet, dass** das Aufbereitungsglied Vg(s) aus folgender Formel berechnet wird:

$$Vg(s) = 1/(1+t\_a*s)$$

und
t_a = Aufbereitungszeit des Gas/Luftgemisch und

s = komplexes Glied

**Claims**

1. Engine speed control method for a gas engine which is controlled by means of at least one electronic control unit (E) and, in addition, an automatic coupling is controlled by an electronic gear control (E), there being calculated a difference between a desired engine speed (n_soll) and an actual engine speed (n_ist) of the gas engine which serves as input variable (e) for a regulator (R), and the regulator (R) supplying a desired engine torque (M_soll) of the gas engine, and the desired engine torque (M_soll) being added to a dynamic precontrol torque (Mv) comprising a desired coupling torque (Mk_soll) to form a desired total torque (Mg_soll), the desired total torque (Mg_soll) being transmitted to the electronic control unit (E), and the electronic control unit (E) requesting the desired total torque (Mg_soll) from the gas engine, and an appropriate gas/air mixture is prepared for the gas engine during a preparation time (t_a), **characterized in that** the preparation time (t_a) of the gas/air mixture is also included in the dynamic precontrol by virtue of the fact that an inverse of a delay element Vg(s) is multiplied by the desired coupling torque (Mk_soll).

2. Control method according to Claim 1, **characterized in that** the preparation time (t_a) is calculated from the engine speed and/or the gas temperature and/or the air temperature.

3. Control method according to Claim 1 or 2, **characterized in that** the regulator (R) has a P-element, an I-element and a D-element, none, one or two of the P-, I- and/or D-elements being set to zero.

4. Control method according to one of Claims 1 to 3, **characterized in that** the precontrol torque (Mv(s)) is calculated from the following formula:

$$Mv(s) = Mk\_soll*(1/Vg(s))$$

and Mk_soll = desired coupling torque and
Vg(s) = preparation element of the gas/air mixture.

5. Control method according to one of Claims 1 to 4, **characterized in that** the preparation element Vg(s) is calculated from the following formula:

$$Vg(s) = 1/(1+t\_a*s)$$

and
t_a = preparation time of the gas/air mixture, and
s = complex element.

**Revendications**

1. Procédé de régulation d'une vitesse de rotation d'un moteur à gaz, lequel est commandé au moyen d'au moins un contrôleur électronique (E) et un accouplement automatisé est en plus commandé par une commande de boîte de vitesse électronique (E), une différence entre une vitesse de rotation de consigne du moteur (n_soll) et une vitesse de rotation effective du moteur (n_ist) du moteur à gaz étant calculée, laquelle sert de grandeur d'entrée (e) pour un régulateur (R) et le régulateur (R) délivrant un couple moteur de consigne (M_soll) du moteur à gaz et le couple moteur de consigne (M_soll) étant additionné à un couple de précommande dynamique (Mv) incluant un couple d'accouplement de consigne (Mk_soll) pour obtenir un couple total de consigne (Mg_soll), le couple total de consigne (Mg_soll) étant communiqué au contrôleur électronique (E) et le contrôleur électronique (E) exigeant le couple total de consigne (Mg_soll) de la part du moteur à gaz et un mélange gaz/air correspondant étant préparé à cet effet pendant une durée de préparation (t_a) pour le moteur à gaz, **caractérisé en ce que** la durée de préparation (t_ a) du mélange gaz/air est incluse dans la précommande dynamique, **en ce qu'**un inverse d'un élément de retard Vg(s) est multiplié par le couple d'accouplement de consigne (Mk_soll).

2. Procédé de régulation selon la revendication 1, **caractérisé en ce que** la durée de préparation (t_a) est calculée à partir de la vitesse de rotation du moteur et/ou de la température du gaz et/ou de la température de l'air.

3. Procédé de régulation selon la revendication 1 ou 2, **caractérisé en ce que** le régulateur (R) présente un élément P, un élément I et un élément D, aucun, un ou deux des éléments P, I ou D étant égal à zéro.

4. Procédé de régulation selon l'une des revendications 1 à 3, **caractérisé en ce que** le couple de précommande (Mv (s)) est calculé à partir de la formule suivants :

$$Mv(s) = Mk\_soll*(1/Vg(s))$$

et Mk_soll = couple d'accouplement de consigne et
Vg(s) = élément de préparation du mélange gaz/air.

5. Procédé de régulation selon l'une des revendications 1 à 4, **caractérisé en ce que** l'élément de préparation Vg(s) est calculé à partir de la formule suivants :

$$Vg(s) = 1/(1+t\_a*s)$$

et
t_a = durée de préparation du mélange gaz/air et
s = élément complexe.

Fig. 1